# EUROPEAN PATENT SPECIFICATION

(11) **EP 3 315 026 B1**
(45) Date of publication and mention of the grant of the patent: **13.05.2020**
(21) Application number: 17198909.8
(22) Date of filing: 27.10.2017
(51) Int. Cl.: A01M 7/00

(54) **AIR DISTRIBUTION APPARATUS FOR AGRICULTURAL SPRAYER MACHINES**
LUFTVERTEILUNGSVORRICHTUNG FÜR LANDWIRTSCHAFTLICHE SPRÜHMASCHINEN
APPAREIL DE DISTRIBUTION D'AIR POUR PULVÉRISATEURS AGRICOLES

(30) Priority: 28.10.2016 IT 201600109233
(43) Date of publication of application: 02.05.2018
(73) Proprietor: Marcantoni, Ivano, 37059 Volon di Zevio (VR) (IT)
(72) Inventor: Marcantoni, Ivano, 37059 Volon di Zevio (VR) (IT)
(74) Representative: Contadin, Giorgio

(56) References cited:
- EP-A1- 1 933 988
- WO-A1-95/16347
- WO-A1-2011/046424
- FR-A1- 2 925 861

## Description

The present invention relates to an improved air distribution apparatus (otherwise known in the field of reference as "conveyor") applicable to agricultural sprayer machines, i.e. to those devices commonly used to spray various types of substances on plants, plantations, fruit trees or for various to other uses in the agricultural sector.

The improved apparatus according to the invention can be applied on agricultural equipment used for supplying treatment substances of the crop, typically fungicides, pesticides (or plant protection products) and other pesticide solutions.

The improved apparatus of the invention allows the remote supply of the substance by means of a constant spray of distributed intensity in an even more homogeneous and balanced manner with respect to the current state of the art.

In essence, the improved apparatus (or conveyor) according to the invention atomizes the aqueous chemical solution in a perfectly balanced outlet air flow which creates a homogeneous flow perpendicular to the axis of the duct of the conveyor which, in operating conditions, is vertically arranged facing the plantation to be treated.

The improved apparatus of the invention therefore fits into the agricultural machines sector, and particularly is associated with or, more generally, is integral part of a spraying machine or atomizer through which plant protection products or pesticide solutions are supplied in general to plantations of orchards such as vineyards and/or similar with the aim of protecting and conserving vegetables (and plant products) or influencing their vital processes (such as growth) or even destroying unwanted vegetables, controlling or avoiding their growth.

It is known that sprayer machines s that can be used in agricultural applications are provided with fans which create a flow of air allowing a predetermined amount of nebulized liquid substance to be sprinkled on rows of plantations, orchards or cultures of various kinds.

Currently, in order to distribute flows of nebulized pesticide, an air atomizer equipment is used which is provided with a distribution apparatus that in operating conditions generally takes a vertical arrangement and is specifically designed for the diffusion of the substance, while the traction tractor which the distribution apparatus is mounted onto runs along the rows side-by-side the crop plants.

The distribution apparatus, as it is generally conceived according to a customary construction consolidated for a long time in the sector, consists of a tubular casing of a predominantly elongated shape and of vertical arrangement, having an elongated slot extending longitudinally along it orthogonally with respect to the direction of progress of the tractor and which represents the area of air outflow.

The atomizer and the elongated tubular casing are connected each other by means of a sleeve through which the air coming from the atomizer flows inside the elongated casing itself. A plurality of nozzles for distributing the treatment liquid (composed of water and pesticide) coming from a reservoir and a pump is arranged at regular intervals along the slot in direction concordant with respect to that one which the slot extends along.

The supply of air from the air distribution apparatus slot and the simultaneous feeding of the treatment liquid from the nozzles cause the emission of a strong jet of nebulized pesticide substance that propagates laterally towards the outside of the distribution apparatus itself.

The air distribution apparatuses of the prior art of more traditional type, as summarized above, present several drawbacks which limit their field of use, at least in relation to the best and most effective performances offered, instead, by the air distribution apparatus described in the European patent EP1933988 B1 in the name of the same proprietor which exhibits the present invention: such a patent successfully overcomes the drawbacks of the most ancient air distribution apparatuses, the main one of which derives from the fact that the air flow is not uniform along the entire length of the distribution area.

This depends on the fact that the air coming from the atomizer connection sleeve pumped inside from the upper (or lower) part of the distribution apparatus, after having run through it, tends to be compressed in its lower part (or in the higher part, in the second case).

It is evident that in the lower (or higher) part the air is expelled at higher pressure, thus creating a decompensation with respect to the opposite upper (or lower) part, where the pressure is considerably lower.

Such an imbalance causes a marked difference in the distribution of the pesticide substance (phytosanitary or plant protection product) on the plantation or on the orchard, with the further negative consequence that the result of the treatment as a whole is not always satisfactory and in some cases must be repeated, thus dispersing time, resources and costs.

These drawbacks are therefore at least partly overcome by means of the air distribution device described in the European patent EP1933988 B1 which represented a considerable technological progress for the machinery of the sector involved herein but which, however, left not completely solved the problem of a fully uniform and balanced distribution of the air along the entire longitudinal, generally vertical, development of the tubular casing, especially if the latter reaches significant lengths (2.3 meters and more).

It happens, indeed, that through the air distribution device (or conveyor) described in the EP1933988 B1 patent, supply of air and, therefore, of the phytosanitary products that it conveys with it, is much greater at the portion of the tubular casing opposite to that one in which it is introduced into the latter: in extreme cases (long length of the tubular casing, of the order of 2 meters), the air flow rate also reaches the value of 50 m/s at the first (generally lower) portion of the tubular casing, opposite to a second (generally higher) portion of the latter at which the air is introduced inside of it and where the air flow takes a value of 20-25 m/s.

This entails a non-homogeneous and non-uniform supply of the phytosanitary products from the conveyor, not perfectly balanced along the entire length of longitudinal development of the conveyor itself and, in return, an equally non-homogeneous and non-optimal treatment of the foliage or shrubs of the plantation of orchard, with the additional obvious disadvantages that this situation produces.

A last but not least drawback of the known air distribution devices of modern conception, represented for example by that one described in the aforementioned patent document EP1933988 B1, derives from their relative constructive complexity to which, for example, the air gap element also contributes which creates a double wall from which the air flows through special openings, creating somewhat (but not perfectly) homogeneous air flows along the entire length of the tubular casing.

This ultimately reflects, the cost of labor and raw materials used being equal, in undesired high or in any case not optimal production costs and therefore necessarily to be reduced. The present invention thus intends to overcome the drawbacks of the prior art described above.

In particular, primary purpose of the present invention is to propose an improved air distribution apparatus (also known as a "conveyor" in the sector concerned) for agricultural sprayer machines.

In the cognitive sphere of this first purpose, it is task of the invention to devise an improved air distribution apparatus for agricultural sprayer machines that results in better, more effective treatment because more homogeneous and more uniform of the foliage and/or shrubs of the fruit plantations compared to equivalent apparatuses of known type.

It is a further task of the invention to make available an improved air distribution apparatus for agricultural sprayer machines which gets what has just been highlighted safeguarding processing times and costs (including that one of the traction fuel of the agricultural tractor which drives and regulates the functioning of the atomizer with which the improved apparatus of the invention is made integral) with respect to the prior art.

It is a second purpose of the present invention is to indicate an improved air distribution apparatus for agricultural sprayer machines which has a constructive conception, in its basic components and essential for solving one of the above-mentioned technical objective problems, simpler than that one of similar air distribution apparatuses of known type. Within the scope of this second purpose, it is task of the invention to provide an improved air distribution apparatus for agricultural sprayer machines which has a lower or at least competitive production cost compared to similar prior art air distribution apparatuses. Said purposes are achieved by means of an improved air distribution apparatus for agricultural sprayer machines according to the attached claim 1, as hereinafter referred for the sake of brevity of exposure.

Other technical features of detail of the improved air distribution apparatus for agricultural sprayer machines of the present invention are reported in the corresponding dependent claims.

The aforementioned claims, specifically and concretely defined below, are integral part of the present description.

Advantageously, the improved air distribution apparatus for agricultural sprayer machines of the invention allows to supply the air, and with it the plant protection products necessary for the treatment of the fruit plantations, in a more uniformly distributed and balanced way along the whole length of the tubular casing which distinguishes it from compared to what happens with similar equipment of known type. This is due to the fact that, in the invention, the air distribution apparatus comprises, at each of the through holes made in the tubular casing, deflector means firmly coupled with the inner wall of the tubular casing itself and suitable to guarantee a homogeneous, uniform and balanced distribution of the air, exiting the tubular casing, along the entire length of the latter, both towards the upper part and towards the lower part.

Still advantageously, the improved air distribution apparatus has a simpler and less articulated constructive conception with respect to the equivalent apparatuses of the prior art, thanks to the absence in it of the gap element provided for example in the apparatus referred to in the European Patent EP1933988 B1.

Equally advantageously, this results for the improved air distribution apparatus of the invention, on one hand, production and assembly costs for the air distribution apparatus of the invention and, on the other hand, an overall weight lower than those ones of similar apparatuses of the prior art, the cost of labor and raw materials used being equal.

In an equally advantageous manner, moreover, the improved air distribution apparatus for agricultural sprayer machines of the present invention allows, in general, to improve the treatment of fruit trees and/or shrubs plantations obtainable therefrom.

Further features and peculiarities of the present invention will become clearer from the following description, relating to a preferred embodiment of the improved air distribution (or conveyor) apparatus for agricultural sprayer machines herein exclusively claimed, given by illustrative but not limiting aims, with reference to the attached drawings where:
- figures 1 and 2 are two distinct schematic and simplified assonometric views of the improved air distribution apparatus of the invention in application and operating conditions;
- figure 3 is a schematic and simplified assonometric view of the improved air distribution apparatus of the invention in application and non-operating conditions;
- figure 4 is a first simplified and partially broken-away assonometric view of the improved air distribution apparatus of figures 1-3;
- figure 5 is a second simplified and partially truncated assonometric view of the improved air distribution apparatus of figures 1-3;
- figure 6 is an enlargement of a detail of figure 4;
- figure 7 is an enlargement of a detail of figure 5;
- figure 8 is a partial and enlarged assonometric view of a constructive detail of figure 5. The air distribution apparatus of the invention is visible, globally numbered with 1, in figures 1-3 in application conditions, i.e. installed on an atomizer (or nebulizer) A used in agriculture for the treatment by plant protection products (or phytosanitary products) of fruit trees and/or shrubs, such as vineyards.

The atomizer (or nebulizer) A is generally mounted on the rear part of an agricultural tractor, not shown in the attached figures, from which it is operated and in this case, purely by way of example, comprises a double pair of air distribution apparatus of the invention (so-called also "lowered" in the traditional jargon of the sector), symmetrically arranged with respect to the atomizer A and, in return, with respect to the agricultural tractor, so as to guarantee the balancing of the weights.

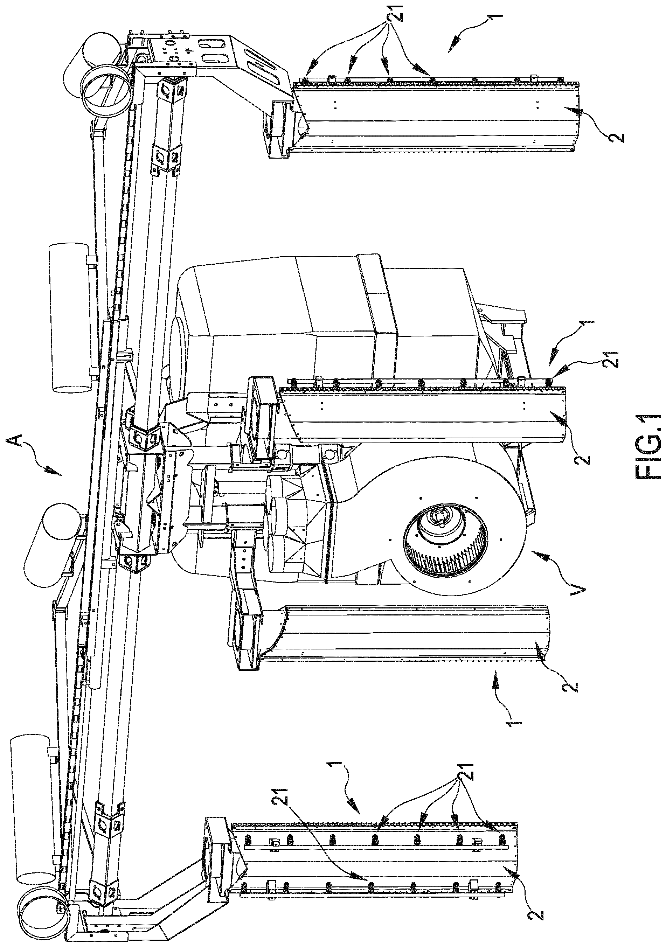

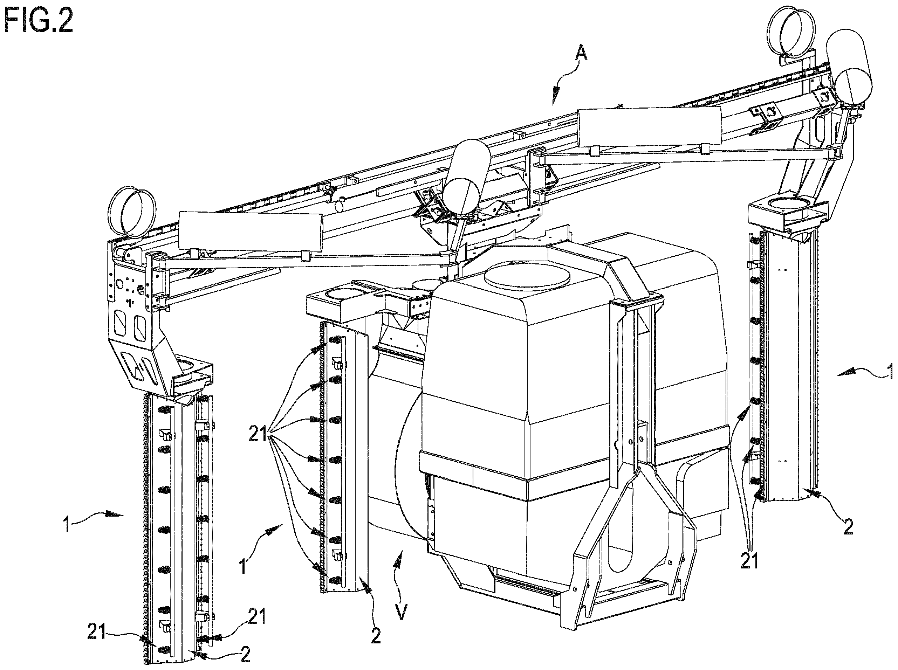

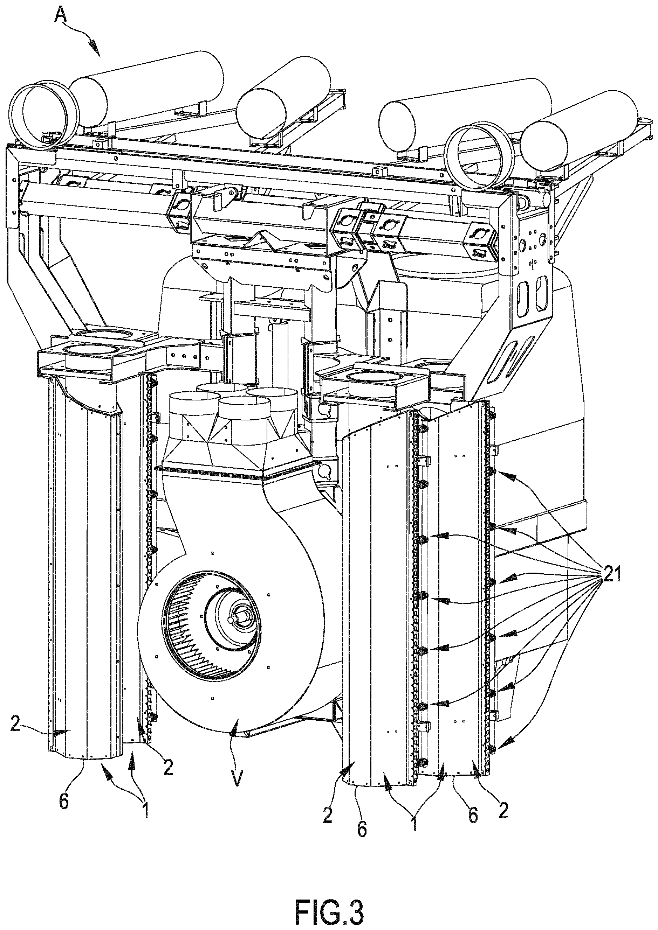

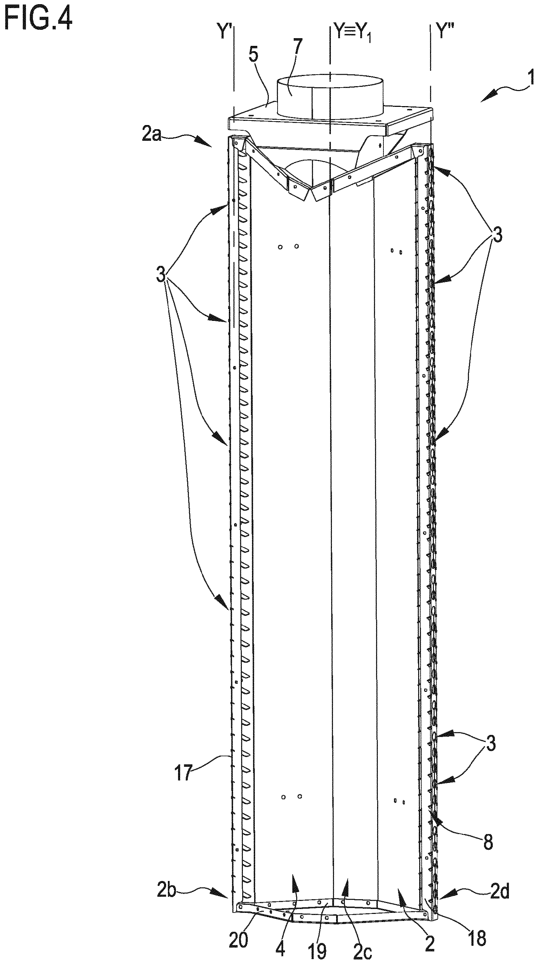

As it can be seen, the air distribution apparatus 1 of these figures 1-3 comprises a tubular casing 2 which:
- mainly develops along a first longitudinal direction Y (generally vertical or in any case parallel to the various rows of the plantation progressively treated, when the air distribution apparatus 1 takes the operating conditions), and presents a plurality of through holes 3, better visible starting from figure 4, which allow communication between the inner volume 4 of the tubular casing 2 and the outer environment and the treatment, by means of pesticides supplied in nebulized form, of plantations, orchards or cultures arranged in trees and/or shrubs rows;
- is delimited and closed, in its upper part 2a, by a first cover 5 and, in its lower part 2b, by a second cover 6;
- is provided in the upper part 2a with a shaped plug 7 suitable for receiving the application of a connecting sleeve (not shown in the figures attached for simplicity) able to convey the air, coming from a production and displacement device of the air itself, such as typically a fan V, inside the tubular casing 2.

In accordance with the innovative features of the invention, the distribution apparatus 1 comprises, at each of the aforesaid through holes 3 of the tubular casing 2, deflector means, generally indicated with 8, firmly coupled with the inner wall 2c of the tubular casing 2 and adapted to ensure a homogeneous, uniform and balanced distribution of air, exiting from said tubular casing 2 itself, along the entire length, both towards the upper part 2a and towards the lower part 2b, of the tubular casing 2.

In particular, the tubular casing 2 presents a constructive composition of the type described and illustrated in the European Patent EP1933988 B1 (but in any case advantageously depict of the inner gap element, with the consequent constructive simplification which accompanies this aspect) whose teachings concerned (i.e. with respect to this specific component) are herein incorporated by reference.

More in detail, the tubular casing 2 is made according to any conventional shape, for example with a polygonal cross-section as in the case described herein and as well highlighted in figure 4; it is not excluded, however, that in other embodiments of the invention, not shown in the following, the cross section of the tubular casing could be circular or elliptical, both regular and irregular, according to the constructive choices. Figure 4 shows that the tubular casing 2 preferably comprises two longitudinal lamellar draw pieces 17, 18 which are equal and opposite each other, having for example a profile which in cross section has a substantially C-shaped profile and are connected each other by two junction elements 19, 20 equal and opposite each other, each having, for example, a profile which in cross section has a shape substantially of isosceles trapezium missing the major base (which is hypothetically in common between the two trapezoidal profiles). As said, during operation, the air output from the tubular casing 2 occurs through the through holes 3 made in a uniformly distributed manner along both the longitudinal lamellar draw pieces 17, 18: these through holes 3 may have a regular but also variable each other diameter and spacing, so that also the combination between the deflector means 8 and the shape and distribution of the through holes 3 allows to control the air flow emitted by the air destruction apparatus 1 in the most suitable and optimal manner possible.

Specifically, according to a customary construction consolidated over time in the sector of relevance herein, the through holes 3 arranged at and near the lower part 2b of the tubular casing 2 have dimensions (for example the diameter) smaller than the through holes 3 arranged at and near the upper part 2a of the tubular casing 2 itself.

The through holes 3 are uniformly distributed along two first linear directions Y', Y", arranged symmetrically with respect to the symmetry axis Y₁ of the tubular casing 2 and parallel each other and to the first longitudinal direction Y, so that the treatment through the phytosanitary products or pesticides conveyed outside the tubular wrapping 2 thanks to the air, in a nebulized form by special spraying nozzles of traditional type, marked with 21 in the first attached figures 1-3, at the same time affects plantations, orchards or cultures arranged in trees and/or shrubs rows adjacent and side-by-side each other.

The two longitudinal lamellar draw pieces 17, 18 are arranged longitudinally on two opposite sides of the air distribution apparatus 1 and in orthogonal direction with respect to the progress direction of the agricultural tractor, so that, during the treatment, the air jets and the liquid treatment mixture are always directed towards the plantation, the orchard or the crop arranged in rows according to a direction orthogonal to the characteristic foliage.

The air coming out of the through holes 3 is combined with the treatment liquid supplied by usual nozzles, not shown in the attached figures, and is distributed in a perfectly homogeneous manner along the entire length of the outer tubular casing 2, thanks to the presence of the deflector means 8.

However, it should be understood that in optional and less frequent embodiments - since technically less efficient, less adequate and less required by the market - of the improved air distribution apparatus of the present invention, not shown, the through holes of the tubular casing could be uniformly distributed along only a first linear direction parallel to the first longitudinal direction along which the tubular casing itself develops, being made only in one of the two longitudinal lamellar draw pieces.

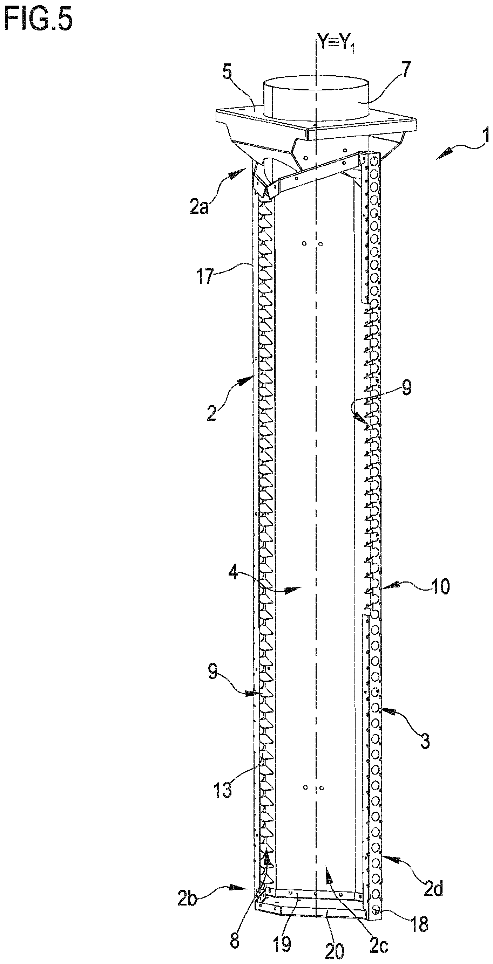

Figures 4-6 also show that the deflector means 8 comprise, preferably but not necessarily, a substantially flat laminar fin 9, one for each of the aforesaid through holes 3, stably coupled with the inner wall 2c of the tubular casing 2 and made for example of metallic material, such as steel.

At preferred but not exclusive title, the laminar fin 9 presents a substantially rectangular shape and height dimension of value between 17 and 23 mm, preferably 20 mm.

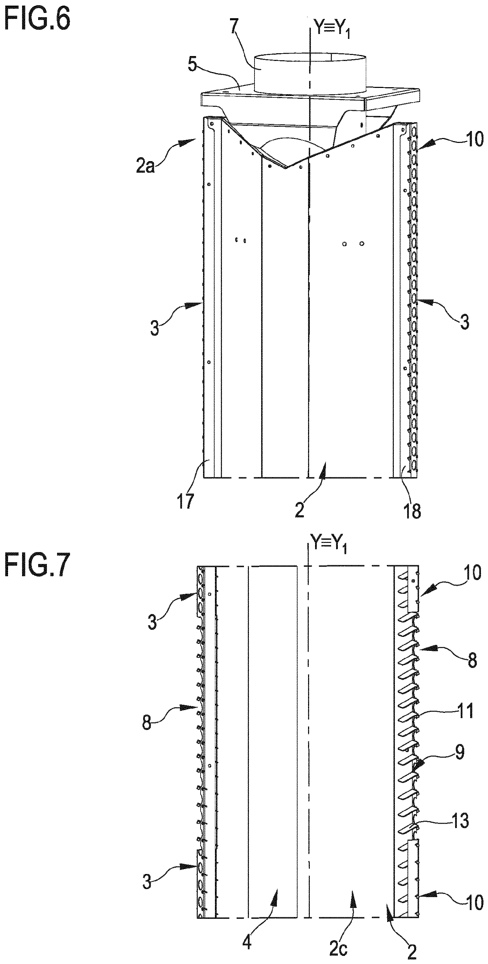

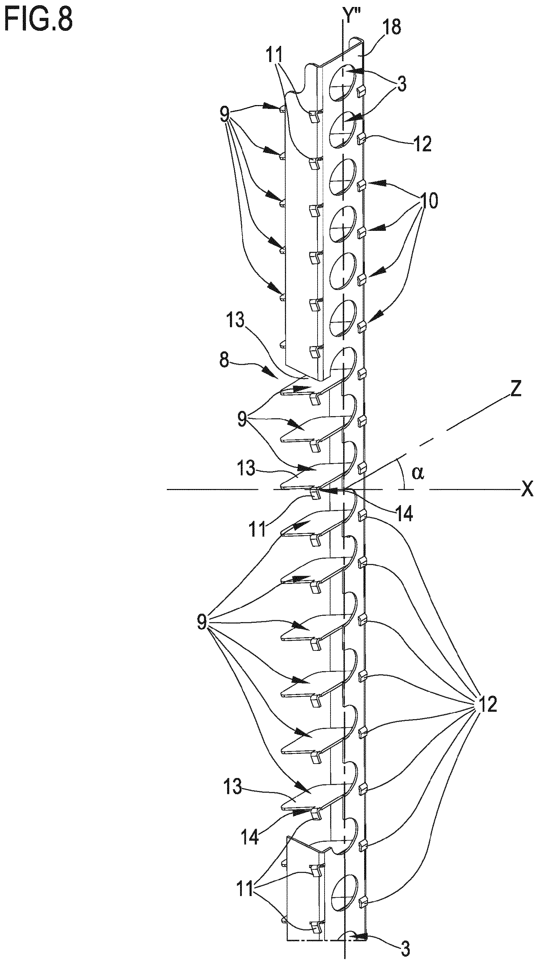

Figures so far cited and with even greater detail the subsequent figures 7 and 8 shows that the deflector means 8 arranged at each of the through holes 3 are coupled with the inner wall 2c of the tubular casing 2 through locking means, overall reported with 10.

In a preferred, although not limiting, way, the locking means 10 comprise in this case a pair of laminar flaps 11, 12 projecting by opposite parts from the main body 13 of the deflector means 8 (particularly of the flat laminar fin 9 in the example described herein), with which it defines, after having been folded, a perimetrical strike undercut 14, in such a way as to be arranged close to the outer wall 2d of the tubular casing 2 after having passed through respective through slots 15, 16 made in the tubular casing 2 at each of the through holes 3: it follows that a prefixed portion of the peripheral edge of the through slots 15, 16 matches with the perimetrical strike undercut 14 defined by the bending of each of the laminar flaps 11, 12, as better shown in figure 8.

Basically, therefore, the laminar tongues 11, 12 are initially coplanar with the main body 13 of the deflector means 8 so that, in a similar configuration, it is possible to insert them into the respective through slots 15, 16 made in the longitudinal lamellar draw pieces 17, 18 of the tubular casing 2 to make them protruding from the latter.

From this position, the laminar flaps 11, 12 are definitively folded by the operator (for example by a stroke of a tool such as a hammer) towards the outer wall 2d of the tubular casing 2 during the assembly phase of the improved air distribution apparatus 1 of the invention, determining the full functionality of the locking means 10.

It is understood that in other embodiments of the improved air distribution apparatus of the invention, not shown in the following drawing tables, the locking means could provide for a number of laminar flaps different from two, this number being able to vary according to the constructive choices starting from one.

Moreover, further embodiments, not shown, of the improved air distribution apparatus for agricultural spraying machines, object of the invention, could provide that the locking means determine for the deflector means a stable coupling however removable with the inner wall of the tubular casing, de facto making the deflector means interchangeable. According to the preferred embodiment described herein of the invention, the deflector means 8 are inclined upwardly in such a way as to direct the air from the bottom to the top and ensure that the pesticides or plant protection products are directed towards and suitably hit the plantations, orchards or cultures from bottom to top: in this way, the improved air distribution device 1 of the invention allows to ensure that even the highest-arranged foliage (over the height of the tubular casing 2) of the plantations, orchards or cultures arranged in rows of shrubs and/or trees is effectively affected by the treatment with pesticide substances or plant protection products, contrary to what happens with similar equipment of known type that does not achieve this significant advantage.

In essence, therefore, the deflector means 8 are placed along an inclined longitudinal direction Z which defines an acute angle α with a second longitudinal direction X, generally horizontal, orthogonal to the first longitudinal direction Y.

More specifically, the acute angle *α* introduced above presents a value between 12° and 18°, preferably 15°.

It should be noted that in embodiments of the improved air distribution apparatus for agricultural sprayer machines of the invention, still not accompanied in the following by explanatory reference figures, some of the deflector means, arranged at some of the through holes made in the upper part of the tubular casing, couldn't be inclined according to an inclined longitudinal direction Z but arranged substantially according to the aforesaid second longitudinal direction X: this in order to optimize the delivery of the pesticides without the possibility of an excessive dispersion thereof upwardly determined by the advantageous, as just said, upward inclination of the deflector means provided optionally by the preferred embodiment described herein of the invention.

The operation of the improved air distribution apparatus for agricultural sprayer machines according to the invention is evident from what has been described above, especially in view of the fact that the innovative features of such an apparatus substantially concern only constructional aspects which positively affect the air flow system of the invention from the tubular casing which represents the final part of the operability of the component object of the present invention.

According to the description just given, it is understood, therefore, that the improved air distribution apparatus for agricultural sprayer machines, object of the present invention, reaches the purposes and achieves the advantages previously mentioned.

Upon execution, changes could be made to the improved air distribution apparatus for agricultural sprayer machines of the current invention consisting, for example, in deflector means different from those ones described previously and those ones shown in the figures of the attached drawings.

It should be noted that the improved air distribution (or conveyor) apparatus for agricultural sprayer machines of the invention could be associated with agricultural sprayer machines provided with two specimens, symmetrically arranged relative to the central axis of the agricultural sprayer machines and, by return, relative to the longitudinal central axis of the agricultural tractor, or even with just one specimen, arranged laterally with respect to such a central axis and particularly suitable for the treatment of plantations, orchards or cultures arranged in trees and/or shrubs rows sloping areas, such as the vineyards in hilly areas.

## Claims

1. Air distribution apparatus (1) for agricultural sprayer machines (A), comprising a tubular casing (2) which:
- mainly develops along a first longitudinal direction (Y) and has a plurality of through holes (3) which allow communication between the inner volume (4) of said tubular casing (2) and the outer environment and the treatment, by means of pesticides supplied in spray form, of plantations, orchards or cultures arranged in trees and/or shrubs rows;
- is delimited and closed, in its upper part (2a), by a first cover (5) and, in its lower part (2b), by a second cover (6);
- is provided in said upper part (2a) with a shaped plug (7) suitable to receive the application of a connecting sleeve able of conveying said air, coming from a production and displacement device of said air, into said tubular casing (2), **characterized in that** it comprises, at each of said through holes (3) of said tubular casing (2), deflector means (8) stably coupled with the inner wall (2c) of said tubular casing (2) and suitable to ensure a homogeneous, uniform and balanced distribution of said air, coming out of said tubular casing (2), along the entire length, both towards said upper part (2a) and towards said lower part (2b), of said tubular casing (2).

2. Apparatus (1) according to claim 1), **characterized in that** at least some of said deflector means (8) are inclined upwardly in such a way as to direct said air from the bottom to the top and ensure that said pesticides are directed towards and hit said plantations, orchards or cultures from the bottom to the top.

3. Apparatus (1) according to any of the preceding claims, **characterized in that** said deflector means (8) are placed along an inclined longitudinal direction (Z) defining an acute angle (*α*) with a second longitudinal direction (X) orthogonal to said first longitudinal direction (Y).

4. Apparatus (1) according to claim 3), **characterized in that** it said acute angle (*α*) presents a value between 12° and 18°.

5. Apparatus (1) according to any of the preceding claims, **characterized in that** said deflector means (8) comprise a laminar fin (9) substantially flat, one for each of said through holes (3), stably coupled with said inner wall (2c) of said tubular casing (2).

6. Apparatus (1) according to claim 5), **characterized in that** said laminar fin (9) presents a height dimension of value between 17 and 23 mm.

7. Apparatus (1) according to any of the preceding claims, **characterized in that** said deflector means (8) are coupled with said inner wall (2c) of said tubular casing (2) through locking means (10).

8. Apparatus (1) according to claim 7), **characterized in that** said locking means (10) comprise at least a laminar flap (11, 12) projecting from the main body (13) of said deflector means (8), with which it defines a perimetrical strike undercut (14), in such a way as to be arranged close to the outer wall (2d) of said tubular casing (2) after having passed through a through slot (15, 16) made in said tubular casing (2) at each of said through holes (3), a prefixed portion of the peripheral edge of said through slot (15, 16) matching with said perimetrical strike undercut (14).

9. Apparatus according to claim 7) or 8), **characterized in that** said locking means determine for said deflector means a stable but removable coupling with said inner wall of said tubular casing.

10. Apparatus (1) according to any of the preceding claims, **characterized in that** said through holes (3) arranged at and near said lower part (2b) of said tubular casing (2) have dimensions smaller than said through holes (3) arranged at and near said upper part (2a) of said tubular casing (2).

11. Apparatus (1) according to any of the preceding claims, **characterized in that** said through holes (3) are uniformly distributed along at least a first linear direction (Y', Y") parallel to said first longitudinal direction (Y) along which said tubular casing (2) develops.

12. Apparatus (1) according to claim 11), **characterized in that** said through holes (3) are uniformly distributed along two linear directions (Y', Y"), arranged symmetrically each other with respect to the symmetry axis (Y₁) of said tubular casing (2) and parallel each other and to said first longitudinal direction (Y), in such a way that said treatment by means of pesticides, conveyed at the output of said tubular casing (2) thanks to said air, simultaneously affects said plantations, orchards or cultures arranged in said trees and/or shrubs rows adjacent and side-by-side each other.

## Patentansprüche

1. Luftverteilungsvorrichtung (1) für landwirtschaftliche Sprühmaschinen (A), umfassend ein rohrförmiges Gehäuse (2), das:
- sich hauptsächlich entlang einer ersten Längsrichtung (Y) entwickelt und eine Vielzahl von Durchgangslöchern (3) aufweist, die eine Kommunikation zwischen dem inneren Volumen (4) des rohrförmigen Gehäuses (2) und der Außenumgebung, sowie die Behandlung von in Baum- und/oder Sträucherreihen angeordneten Plantagen, Obstgärten oder Kulturen mittels in Sprühform gelieferter Pestizide ermöglichen;
- an seinem oberen Teil (2a) durch eine erste Abdeckung (5) und an seinem unteren Teil (2b) durch eine zweite Abdeckung (6) begrenzt und geschlossen ist;
- am oberen Teil (2a) mit einem zur Aufnahme bzw. Einsetzen einer Verbindungshülse geeignet geformten Stecker (7) versehen ist, welche in der Lage ist, die aus einer Lufterzeugungs- und Verdrängungsvorrichtung kommenden Luft in das rohrförmige Gehäuse (2) zu befördern,
**dadurch gekennzeichnet, dass** sie an jedem der Durchgangslöcher (3) des rohrförmigen Gehäuses (2), Ablenkmittel (8) umfasst, die stabil mit der Innenwand (2c) des rohrförmigen Gehäuses (2) gekoppelt und geeignet sind eine homogene, gleichmäßige und ausgeglichene Verteilung der Luft zu gewährleisten, die aus dem rohrförmigen Gehäuse (2) entlang der gesamten Länge, sowohl in Richtung des oberen Teils (2a) als auch in Richtung des unteren Teils (2b) des rohrförmigen Gehäuses (2) austritt.

2. Vorrichtung (1) nach Anspruch 1), **dadurch gekennzeichnet, dass** mindestens einige der Ablenkmittel (8) so nach oben geneigt sind, dass die Luft von unten nach oben geleitet wird und sichergestellt ist, dass die Pestizide auf die Plantagen, Obstgärten oder Kulturen gerichtet sind und diese von unten nach oben abgespritzt werden.

3. Vorrichtung (1) nach irgendeinem der vorhergehenden Ansprüche, **dadurch gekennzeichnet, dass** die Ablenkmittel (8) entlang einer geneigten Längsrichtung (Z) angeordnet sind, die einen spitzen Winkel (a) mit einer zweiten Längsrichtung (X) orthogonal zur ersten Längsrichtung (Y) definiert.

4. Vorrichtung (1) nach Anspruch 3), **dadurch gekennzeichnet, dass** der spitze Winkel (a) einen Wert zwischen 12° und 18° beträgt.

5. Vorrichtung (1) nach irgendeinem der vorhergehenden Ansprüche, **dadurch gekennzeichnet, dass** die Ablenkmittel (8) je eine im Wesentlichen flache laminare Rippe (9) für jedes der Durchgangslöcher (3) umfassen, die stabil mit der Innenwand (2c) des rohrförmigen Gehäuses (2) gekoppelt ist.

6. Vorrichtung (1) nach Anspruch 5), **dadurch gekennzeichnet, dass** die laminare Rippe (9) eine Höhenabmessung mit einem Wert zwischen 17 und 23 mm aufweist.

7. Vorrichtung (1) nach irgendeinem der vorhergehenden Ansprüche, **dadurch gekennzeichnet, dass** die Ablenkmittel (8) mit der Innenwand (2c) des rohrförmigen Gehäuses (2) durch Verriegelungsmittel (10) gekoppelt sind.

8. Vorrichtung (1) nach Anspruch 7), **dadurch gekennzeichnet, dass** die Verriegelungsmittel (10) mindestens eine laminare Klappe (11, 12) umfassen, die aus dem Hauptkörper (13) des Ablenkmittels (8) herausragt, womit sie eine umfängliche Anschlaghinterschneidung (14) definiert, so dass sie nahe an der Außenwand (2d) des rohrförmigen Gehäuses (2) angeordnet ist, nachdem sie durch einen im rohrförmigen Gehäuse (2) an jedem der Durchgangslöcher (3) hergestellten Durchgangsschlitz (15, 16) geführt wurde, wobei ein vorgegebener Abschnitt des Umfangrandes des Durchgangsschlitzes (15, 16) mit der umfänglichen Anschlaghinterschneidung (14) übereinstimmt.

9. Vorrichtung nach Anspruch 7) oder 8), **dadurch gekennzeichnet, dass** die Verriegelungsmittel für die Ablenkmittel eine stabile, aber lösbare Koppelung mit der Innenwand des rohrförmigen Gehäuses bestimmen.

10. Vorrichtung (1) nach irgendeinem der vorhergehenden Ansprüche, **dadurch gekennzeichnet, dass** die an und nahe dem unteren Teil (2b) des rohrförmigen Gehäuses (2) angeordnete Durchgangslöcher (3), Abmessungen aufweisen, die kleiner sind als die Durchgangslöcher (3), die an und nahe dem oberen Teil (2a) des rohrförmigen Gehäuses (2) angeordnet sind.

11. Vorrichtung (1) nach irgendeinem der vorhergehenden Ansprüche, **dadurch gekennzeichnet, dass** die Durchgangslöcher (3) gleichmäßig entlang mindestens einer ersten linearen Richtung (Y ', Y ") parallel zur ersten Längsrichtung (Y) verteilt sind, entlang welcher sich das rohrförmige Gehäuse (2) erstreckt.

12. Vorrichtung (1) nach Anspruch 11), **dadurch gekennzeichnet, dass** die Durchgangslöcher (3) gleichmäßig entlang zweier linearer Richtungen (Y ', Y ") verteilt sind, die symmetrisch zueinander in Bezug auf die Symmetrieachse (Y₁) des rohrförmigen Gehäuses (2) und parallel zueinander und zur ersten Längsrichtung (Y) angeordnet sind, so dass die Behandlung mittels Pestiziden, die dank der Luft am Ausgang des rohrförmigen Gehäuses (2) gefördert werden, gleichzeitig auf die Plantagen, Obstgärten oder Kulturen wirkt, die in den Baum- und/oder Sträucherreihen aneinander anliegend und nebeneinander angeordnet sind.

## Revendications

1. Appareil de répartition d'air (1) pour des machines pulvérisatrices à usage agricole (A), comprenant une enveloppe tubulaire (2) qui :
- se développe principalement le long d'une première direction longitudinale (Y) et a une pluralité de trous traversants (3) qui permettent une communication entre le volume interne (4) de ladite enveloppe tubulaire (2) et l'environnement externe et le traitement, au moyen de pesticides fournis sous forme de pulvérisation, de plantations, de vergers ou de cultures agencés en rangées d'arbres et/ou d'arbustes ;
- est délimitée et fermée, dans sa partie supérieure (2a), par un premier couvercle (5) et, dans sa partie inférieure (2b), par un deuxième couvercle (6) ;
- est pourvue dans ladite partie supérieure (2a) d'un bouchon profilé (7) approprié pour recevoir l'application d'un manchon de raccordement apte à transporter ledit air, provenant d'un dispositif de production et de déplacement dudit air, jusque dans ladite enveloppe tubulaire (2),
**caractérisé en ce qu'**il comprend, au niveau de chacun desdits trous traversants (3) de ladite enveloppe tubulaire (2), des moyens déflecteurs (8) couplés de façon stable à la paroi interne (2c) de ladite enveloppe tubulaire (2) et appropriés pour assurer une répartition homogène, uniforme et équilibrée dudit air, sortant de ladite enveloppe tubulaire (2), le long de toute la longueur, à la fois vers ladite partie supérieure (2a) et vers ladite partie inférieure (2b), de ladite enveloppe tubulaire (2).

2. Appareil (1) selon la revendication 1), **caractérisé en ce qu'**au moins certains desdits moyens déflecteurs (8) sont inclinés vers le haut de sorte à diriger ledit air du bas vers le haut et à assurer que lesdits pesticides sont dirigés vers et touchent lesdits plantations, vergers ou cultures de bas jusqu'en haut.

3. Appareil (1) selon n'importe lesquelles des revendications précédentes, **caractérisé en ce que** lesdits moyens déflecteurs (8) sont placés le long d'une direction longitudinale inclinée (Z) définissant un angle aigu (a) avec une deuxième direction longitudinale (X) orthogonale à ladite première direction longitudinale (Y).

4. Appareil (1) selon la revendication 3), **caractérisé en ce que** ledit angle aigu (a) présente une valeur comprise entre 12° et 18°.

5. Appareil (1) selon n'importe lesquelles des revendications précédentes, **caractérisé en ce que** lesdits moyens déflecteurs (8) comprennent une ailette laminaire (9) substantiellement plate, une pour chacun desdits trous traversants (3), couplée de façon stable à ladite paroi interne (2c) de ladite enveloppe tubulaire (2).

6. Appareil (1) selon la revendication 5), **caractérisé en ce que** ladite ailette laminaire (9) présente une dimension de valeur en hauteur comprise entre 17 et 23 mm.

7. Appareil (1) selon n'importe lesquelles des revendications précédentes, **caractérisé en ce que** lesdits moyens déflecteurs (8) sont couplés avec ladite paroi interne (2c) de ladite enveloppe tubulaire (2) par le biais de moyens de verrouillage (10).

8. Appareil (1) selon la revendication 7), **caractérisé en ce que** lesdits moyens de verrouillage (10) comprennent au moins un volet laminaire (11, 12) faisant saillie à partir du corps principal (13) desdits moyens déflecteurs (8), avec lequel il définit une contre-dépouille de frappe périmétrique (14), de sorte à être agencée à proximité de la paroi externe (2d) de ladite enveloppe tubulaire (2) après avoir traversé une fente traversante (15, 16) pratiquée dans ladite enveloppe tubulaire (2) au niveau de chacun desdits trous traversants (3), une portion pré-fixée du bord périphérique de ladite fente traversante (15, 16) correspondant à ladite contre-dépouille de frappe périmétrique (14).

9. Appareil selon la revendication 7) ou la revendication 8), **caractérisé en ce que** lesdits moyens de verrouillage déterminent pour lesdits moyens déflecteurs un couplage stable mais amovible avec ladite paroi interne de ladite enveloppe tubulaire.

10. Appareil (1) selon n'importe lesquelles des revendications précédentes, **caractérisé en ce que** lesdits trous traversants (3) agencés au niveau et à proximité de ladite partie inférieure (2b) de ladite enveloppe tubulaire (2) ont des dimensions inférieures auxdits trous traversants (3) agencés au niveau et à proximité de ladite partie supérieure (2a) de ladite enveloppe tubulaire (2).

11. Appareil (1) selon n'importe lesquelles des revendications précédentes, **caractérisé en ce que** lesdits trous traversants (3) sont répartis uniformément le long au moins d'une première direction linéaire (Y', Y") parallèle à ladite première direction longitudinale (Y) le long de laquelle ladite enveloppe (2) se développe.

12. Appareil (1) selon la revendication 11), **caractérisé en ce que** lesdits trous traversants (3) sont répartis uniformément selon deux directions linéaires (Y', Y"), agencées symétriquement l'une par rapport à l'autre par rapport à l'axe de symétrie (Y₁) dudit boîtier tubulaire (2) et parallèles entre elles et à ladite première direction longitudinale (Y), de sorte que ledit traitement au moyen de pesticides, transporté au niveau de la sortie de ladite enveloppe tubulaire (2) grâce audit air, affecte simultanément lesdits plantations, vergers ou cultures agencés en lesdites rangées d'arbres et/ou d'arbustes adjacentes et les unes à côté des autres.
